# EUROPEAN PATENT APPLICATION

(11) **EP 4 258 390 A1**
(43) Date of publication of application: **11.10.2023**
(21) Application number: 21913384.0
(22) Date of filing: 26.10.2021
(51) Int. Cl.: H01M 4/70, H01M 4/80, H01M 10/052

(54) **NEGATIVE CURRENT COLLECTOR, PREPARATION METHOD THEREFOR, AND LITHIUM METAL BATTERY**

(30) Priority: 31.12.2020 CN 202011620667
(71) Applicant: Huawei Technologies Co., Ltd., Longgang District Shenzhen, Guangdong 518129 (CN)
(72) Inventor: XIA, Shengan, Shenzhen, Guangdong 518129 (CN); WANG, Pinghua, Shenzhen, Guangdong 518129 (CN); LEI, Dan, Shenzhen, Guangdong 518129 (CN); YANG, Junfeng, Shenzhen, Guangdong 518129 (CN)
(74) Representative: Thun, Clemens
(86) International application number: PCT/CN2021/126301
(87) International publication number: WO 2022/142639

(57) **Abstract**

This application provides a negative electrode current collector of a lithium metal battery. The negative electrode current collector includes: a current collector substrate provided with a plurality of pore channels, a lithium dissolving agent filled in the pore channel of the current collector substrate, and a locking layer attached to a pore wall of the pore channel and located between the pore wall of the pore channel and the lithium dissolving agent. The lithium dissolving agent is a liquid or a gel capable of dissolving lithium metal. The locking layer is configured to constrain the lithium dissolving agent to the pore channel of the current collector substrate. This application further provides the lithium metal battery using the negative electrode current collector and a preparation method for the negative electrode current collector. The negative electrode current collector locks lithium ions in the pore channels of the current collector substrate and stores them in the form of a liquid or a gel, which can not only reduce volume expansion caused by lithium deposition, but can also reduce the generation of lithium dendrites, thereby greatly improving safety of the battery.

## Description

### CROSS-REFERENCE TO RELATED APPLICATIONS

This application claims priority to Chinese Patent No. 202011620667.3, filed with the China National Intellectual Property Administration on December 31, 2020 and entitled "NEGATIVE ELECTRODE CURRENT COLLECTOR AND PREPARATION METHOD THEREFOR, AND LITHIUM METAL BATTERY", which is incorporated herein by reference in its entirety.

### TECHNICAL FIELD

This application relates to the field of lithium battery technologies, and specifically, to a negative electrode current collector and a preparation method therefor, and a lithium metal battery using the negative electrode current collector.

### BACKGROUND

The core components of a lithium metal battery mainly include a positive electrode, a negative electrode, an electrolyte solution, and a separator. Generally, a metal foil is used as a current collector. A positive electrode is formed by coating a positive electrode current collector with a positive electrode slurry containing a cathode active material and a binder. A negative electrode is formed by coating a negative electrode current collector with a negative electrode slurry containing an anode active material and a binder. The separator is located between the positive electrode and the negative electrode. The electrolyte solution is filled between the positive electrode and the separator, and between the negative electrode and the separator. During charging, lithium ions are deintercalated from a crystal lattice of the cathode material, and are deposited into the negative electrode after passing through the electrolyte solution. During discharging, the lithium ions are deintercalated from the negative electrode, and are intercalated into the crystal lattice of the cathode material after passing through the electrolyte solution. In a charging and discharging process, cyclic deposition and deintercalation of lithium ions may cause expansion and contraction of a cell system. In addition, due to the uneven deposition of the lithium ions, lithium dendrites may be formed, which reduces Coulombic efficiency and causes a safety problem (a short circuit may be caused after the lithium dendrites pierce the separator, which brings a great safety risk).

### SUMMARY

A first aspect of the embodiments of this application provides a negative electrode current collector of a lithium metal battery. The negative electrode current collector includes:
a porous current collector substrate provided with a plurality of pore channels;
a lithium dissolving agent filled in the pore channels of the current collector substrate, the lithium dissolving agent being a liquid or a gel capable of dissolving lithium metal; and
a locking layer attached to a pore wall of the pore channel and located between the pore wall of the pore channel and the lithium dissolving agent, where the locking layer is configured to constrain the lithium dissolving agent to the pore channel of the current collector substrate.

The negative electrode current collector can lock lithium ions in the pore channels of the porous current collector substrate and stores them in the form of a liquid or a gel, which can not only reduce volume expansion caused by lithium deposition, but can also reduce the generation of lithium dendrites, thereby greatly improving safety of the battery.

In an implementation of this application, a pore size of each pore channel is less than 100 µm, and a porosity of the current collector substrate ranges from 20% to 85%.

In an implementation of this application, a thickness of the current collector substrate ranges from 5 µm to 150 µm.

In an implementation of this application, the lithium dissolving agent includes at least one selected from a small-molecule aromatic hydrocarbon capable of complexing lithium ions or a polymer that contains an aromatic hydrocarbon group and is capable of complexing lithium ions, a small-molecule solvent capable of complexing lithium ions, and a polymer capable of complexing lithium ions; the small-molecule solvent capable of complexing lithium ions includes an ether-based solvent, an amine-based small-molecule solvent, and thioether- and alcohol-based small-molecule solvents; and the polymer capable of complexing lithium ions includes a polyether polymer, a polyamine polymer, and a polythiol polymer.

In an implementation of this application, a volume molar concentration of lithium in the lithium dissolving agent ranges from 0.1 M to 10 M.

In an implementation of this application, the small-molecule aromatic hydrocarbon includes biphenyl, naphthalene, phenanthrene, anthracene, tetracene, or pyrene;
the polymer containing an aromatic hydrocarbon group includes a polymer containing an aromatic group of biphenyl, naphthalene, phenanthrene, anthracene, tetracene, or pyrene;
the ether-based solvent includes ethylene glycol dimethyl ether, ethylene glycol diethyl ether, diethylene glycol dimethyl ether, tetraethylene glycol dimethyl ether, polyethylene glycol dimethyl ether, tetrahydrofuran, tetrahydropyran, 2-methyl tetrahydrofuran, 1,3-dioxolane, 4-methyl-1,3-dioxolane, 1,4-dioxane, dimethyl ether, isopropyl ether, n-butyl ether, di-n-butyl ether, dimethoxymethane, dimethoxypropane, diglyme, 12-crown-4, 15-crown-5, or 18-crown-6;
the amine-based small-molecule solvent includes ethylenediamine dimethylamine, ethylenediamine tetramethylamine, or diethylenetriamine tetramethylamine,
the thioether-based small-molecule solvent includes ethanedithiol dimethyl sulfide, ethanedithiol diethyl sulfide, diethyl dithiodimethyl ether, or tetraethyl dithiodimethyl ether;
the alcohol-based small-molecule solvent includes hexanol, heptanol, octanol, nonanol and higher fatty alcohol, polyethylene glycol, or polyethylene glycol monomethyl ether;
the polyether polymer includes polyethylene oxide or polypropylene oxide;
the polyamine polymer includes polyethylenediamine or polymethylethylenediamine; and
the polythiol polymer includes polyethylenedithiol or methylpolyethylenethiol.

In an implementation of this application, a material of the locking layer is at least one selected from polyvinylidene fluoride, polyethylene oxide, polyacrylic acid, styrene-butadiene rubber, carboxymethyl cellulose, polypyrrole, polyacrylonitrile, plant fiber, graphene, graphene oxide, hard carbon, soft carbon, graphite, C₃N₄, rosin acid, rosin glycerol ester, polyvinyl alcohol, naphthalene sulfonic acid, benzamide, polyvinylidene fluoride, polyethyleneimine, tetraethyl orthosilicate, polyvinyl chloride, hydrazine hydrate, trimethylsulfoxide iodide, polytetrafluoroethylene, a copolymer of polyvinylidene fluoride and hexafluoropropylene, polyurethane, or polyacrylate.

In an implementation of this application, a coating thickness of the locking layer ranges from 50 nm to 10 µm.

In an implementation of this application, a location inducing layer is further provided on the pore wall of the pore channel, the location inducing layer possesses a property of a chemical reaction with lithium ions or a lithiophilic property, and the location inducing layer is configured to cooperate with the locking layer to control a deposition position and a deposition direction of the lithium ions.

In an implementation of this application, a material of the location inducing layer is at least one selected from gold, silver, tin, zinc, magnesium, indium, copper oxide, zinc oxide, aluminum oxide, silicon, and germanium.

In an implementation of this application, the current collector substrate includes a first surface and a second surface that are disposed opposite each other; a plurality of pore channels are provided on each of the first surface and the second surface, none of the pore channels run through the current collector substrate, and the pore channel provided on the first surface and the pore channel provided on the second surface are not in communication with each other.

A second aspect of the embodiments of this application provides a lithium metal battery. The lithium metal battery includes a negative electrode current collector described above, a positive electrode, and a separator located between the negative electrode current collector and the positive electrode, where the lithium metal battery directly uses the negative electrode current collector as a negative electrode.

A locking layer and/or a location inducing layer are attached to a wall of a pore channel of the negative electrode current collector. A lithium dissolving agent is filled in the pore channel, and exists stably in the pore channel by means of capillary adsorption. During charging, lithium ions enter the porous current collector unit, and are combined with the lithium dissolving agent to form liquid or gel lithium, which can exist stably in the current collector unit, and reduce the risk of lithium dendrites.

In an implementation of this application, the lithium metal battery further includes a positive and negative electrode isolation layer, the positive and negative electrode isolation layer is located between the positive electrode and the negative electrode current collector, and the positive and negative electrode isolation layer is configured to exchange lithium ions and prevent the lithium dissolving agent in the negative electrode current collector from reacting with the positive electrode.

In an implementation of this application, the positive and negative electrode isolation layer includes a cation exchange membrane and a solid-state electrolyte; and a thickness of the positive and negative electrode isolation layer ranges from 20 µm to 500 µm.

A third aspect of the embodiments of this application provides a preparation method for a negative electrode current collector. The preparation method includes:
providing a current collector substrate;
forming a plurality of pore channels in the current collector substrate;
forming a locking layer on a pore wall of the pore channel; and
filling a lithium dissolving agent in the pore channels, where the lithium dissolving agent is a liquid or a gel capable of dissolving lithium metal, and the locking layer is configured to constrain the lithium dissolving agent to the pore channels of the current collector substrate.

The preparation method has a simple process, and the lithium dissolving agent can be constrained to the pore channels of the current collector substrate by capillary action.

In an implementation of this application, the step of forming a plurality of pore channels in the current collector substrate includes forming each pore channel having a pore size less than 100 µm, with a porosity of the current collector substrate ranging from 20% to 85%.

In an implementation of this application, the preparation method for the negative electrode current collector further includes a step of forming location inducing layers on the pore walls of the pore channels before the locking layers are formed on the pore walls of the plurality of pore channels, the location inducing layer possesses a property of a chemical reaction with lithium ions or a lithiophilic property, and the location inducing layer is configured to cooperate with the locking layer to control a deposition position and a deposition direction of the lithium ions.

In an implementation of this application, a coating thickness of the location inducing layer ranges from 10 nm to 800 nm; and a material of the location inducing layer is at least one selected from gold, silver, tin, zinc, magnesium, indium, copper oxide, zinc oxide, aluminum oxide, silicon, and germanium.

### BRIEF DESCRIPTION OF DRAWINGS

FIG. 1 is a schematic diagram of a structure of an anode-free lithium metal battery according to an embodiment of this application;
FIG. 2 is a schematic sectional view of a negative electrode current collector according to a first embodiment;
FIG. 3 is a schematic top view of the negative electrode current collector according to the first embodiment,
FIG. 4 is a schematic sectional view of a negative electrode current collector according to a second embodiment; and
FIG. 5 is a schematic diagram of a capacity retention after 100 battery charge/discharge cycles in Examples 1 to 4 and Comparative example.

**List of reference numerals of main elements**

| | |
|---|---|
| Anode-free lithium metal battery | 100 |
| Negative electrode current collector | 10 |
| Positive electrode | 30 |
| Separator | 50 |
| Positive electrode current collector | 31 |
| Positive electrode slurry | 33 |
| Pore channel | 101 |
| Current collector substrate | 11 |
| Lithium dissolving agent | 13 |
| Locking layer | 15 |
| Location inducing layer | 17 |
| First surface | 102 |
| Second surface | 104 |

### DESCRIPTION OF EMBODIMENTS

The embodiments of this application are described below with reference to the accompanying drawings for the embodiments of this application.

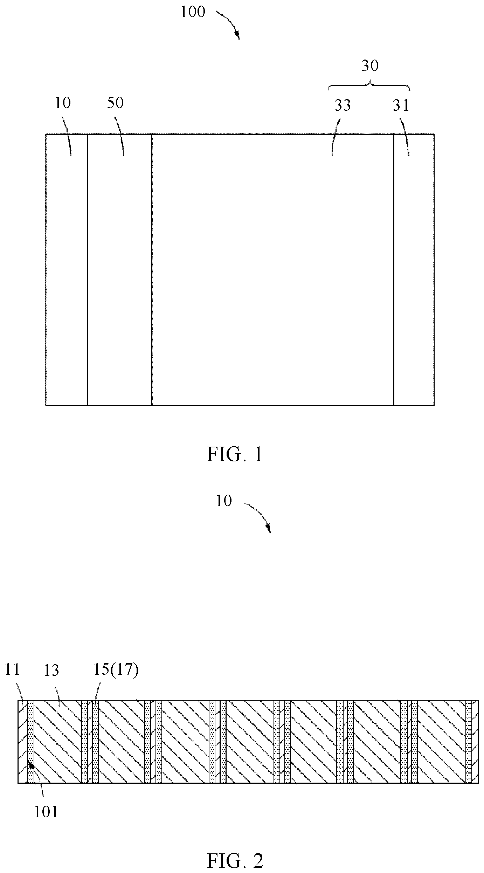

As shown in FIG. 1, an anode-free lithium metal battery 100 includes a negative electrode current collector 10, a positive electrode 30, and a separator 50 located between the negative electrode current collector 10 and the positive electrode 30. The anode-free lithium metal battery 100 directly uses the negative electrode current collector 10 as a negative electrode. During charging, metallic lithium is deposited on a surface of the negative electrode current collector 10, and during discharging, the metallic lithium turns into lithium ions and returns to the positive electrode, thereby implementing cyclic charging and discharging. The positive electrode 30 may include a positive electrode current collector 31 and a positive electrode slurry 33 that is provided on the positive electrode current collector 31 and that contains a cathode active material, a binder, a conductive agent, and the like. The cathode active material may be a lithium cobalt oxide material, NCM/NCA layered lithium transition metal oxides, a lithium-rich cathode material, or the like. The anode-free lithium metal battery 100 may further include an electrolyte solution (not shown in the figure). Generally, the positive electrode 30, the negative electrode, and the separator 50 are all porous structures, and the electrolyte solution may be filled in pores of the positive electrode 30, the negative electrode, and the separator 50.

It may be understood that the anode-free lithium metal battery 100 may also be an all-solid-state lithium metal battery. The all-solid-state lithium metal battery has a solid-state electrolyte, and the solid-state electrolyte may be designed integrally with the cathode active material. The positive electrode slurry containing the cathode active material, the binder, the conductive agent, and the like and the solid-state electrolyte are formed on a surface of the positive electrode current collector 31. The positive electrode slurry and the solid-state electrolyte material are mixed and stirred at an appropriate ratio, then applied on the surface of the positive electrode current collector, and baked in vacuum, so as to obtain a positive electrode that integrates the cathode active substance and the solid-state electrolyte.

However, as the use time of the battery increases, lithium ions are cyclically deposited and deintercalated, and a cell system expands and contracts. In addition, due to the uneven deposition of the lithium ions, lithium dendrites are easily formed, and the lithium dendrites may pierce the separator, causing a short circuit, which brings a great safety risk.

This application provides a negative electrode current collector 10 for an anode-free lithium metal battery 100. The negative electrode current collector 10 may lock lithium ions in pore channels of the porous negative electrode current collector 10 and store them in a liquid or gel state. This can not only reduce volume expansion caused by lithium deposition, but can also reduce the generation of lithium dendrites, thereby greatly improving safety of the battery.

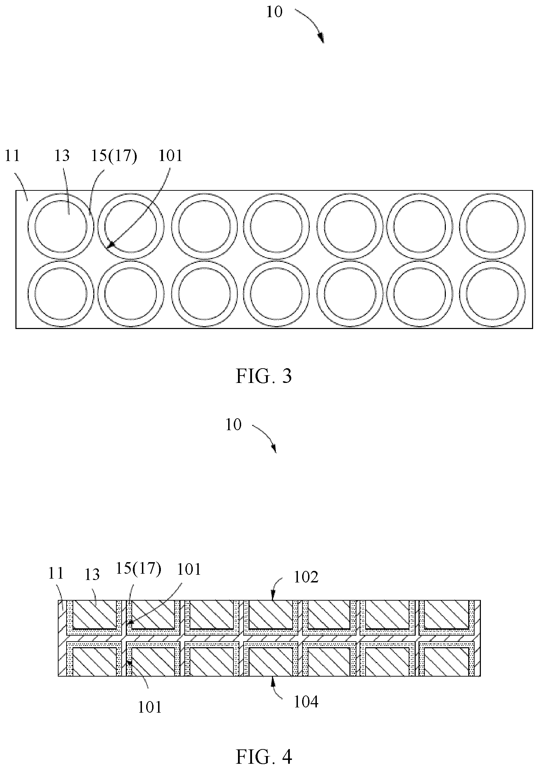

As shown in FIG. 2 and FIG. 3, the negative electrode current collector 10 in this embodiment of this application includes a current collector substrate 11 provided with a plurality of pore channels 101, and a lithium dissolving agent 13 and a locking layer 15 that are provided in the pore channel 101. The lithium dissolving agent 13 is filled in the pore channel 101 of the current collector substrate 11 by means of capillary adsorption. The lithium dissolving agent 13 is a liquid or a gel capable of dissolving lithium metal. The locking layer 15 is attached to a pore wall of the pore channel 101 and is located between the pore wall of the pore channel 101 and the lithium dissolving agent 13. The locking layer 15 may be configured to improve wetting performance of the lithium dissolving agent 13, so as to constrain the lithium dissolving agent 13 to the pore channel 101 of the current collector substrate 11.

A material of the current collector substrate 11 may be a conductive material such as copper, stainless steel, or alloy. The current collector substrate 11 is a thin layer with a thickness of 5 µm to 150 µm, preferably 10 µm to 50 µm. It should be noted that, unless otherwise specified, all parameter ranges in this application include end values.

A conventional current collector substrate 11 may be processed by etching and/or electroplating, to form pore channels 101 in a capillary array. The porous current collector substrate 11 can not only collect current, but can also serve as a liquid carrier of lithium ions. The arrangement of the plurality of pore channels 101 may be regular arrangement, for example, substrate arrangement, or may be irregular arrangement, for example, may be a foam type structure. Each pore channel 101 may run through the current collector substrate 11, or may not run through the current collector substrate 11. A pore size of each pore channel 101 is less than 100 µm, to ensure capillary effect. A porosity of the current collector substrate 11 ranges from 20% to 85%, so that the current collector substrate 11 can accommodate a sufficient amount of lithium dissolving agent 13.

The lithium dissolving agent 13 is a liquid or a gel capable of dissolving lithium metal, and may dissolve the metallic lithium through a synergistic effect of different organic solvents/polymers, and adsorb lithium ions into the pore channel 101 of the current collector substrate 11. In addition, the adsorbed lithium and the lithium dissolving agent 13 exist together in a liquid or semi-liquid form to avoid lithium dendrites. A contact angle between the lithium dissolving agent 13 and the current collector substrate 11 is an acute angle.

The lithium dissolving agent 13 needs to dissolve the lithium metal in an organic solvent/polymer in an inert atmosphere. The lithium metal undergoes a chemical reaction with the organic solvent/polymer, and a valence state of lithium changes from 0 to +1, forming a lithium compound. The inert atmosphere may be a nitrogen atmosphere or an argon atmosphere.

The current collector substrate 11 is processed into the pore channels 101 in a capillary array, and lithium ions in a quasi-solid or liquid state are adsorbed and stored in the pore channels 101 of capillaries by using the capillary principle, thereby limiting an existence range of lithium, eliminating a potential risk of lithium dendrites, and improving safety of the lithium metal battery.

The lithium dissolving agent 13 includes at least one selected from a small-molecule aromatic hydrocarbon capable of complexing lithium ions or a polymer that contains an aromatic hydrocarbon group and is capable of complexing lithium ions, a small-molecule solvent (including an ether-based solvent, an amine-based small-molecule solvent, a thioether small-molecule solvent, and an alcohol-based small-molecule solvent) capable of complexing lithium ions, and a polymer (including a polyether polymer, a polyamine polymer, and a polythiol polymer) capable of complexing lithium ions, and is preferably a mixed solution configured by two or more classes. A volume molar concentration of lithium in the lithium dissolving agent may range from 0.1 M to 10 M. If the concentration of lithium in the lithium dissolving agent is excessively low, the loss of lithium ions in a charging and discharging process cannot be fully supplemented. If the concentration of lithium in the lithium dissolving agent is excessively high, excessive lithium supplementation may easily occur, resulting in lithium precipitation on a positive electrode plate and causing safety hazards.

The small-molecule aromatic hydrocarbon includes, but is not limited to, biphenyl, naphthalene, phenanthrene, anthracene, tetracene, pyrene, or the like.

The polymer containing an aromatic hydrocarbon group includes, but is not limited to, a polymer containing an aromatic group of biphenyl, naphthalene, phenanthrene, anthracene, tetracene, pyrene, or the like.

The ether-based solvent includes, but is not limited to, a linear ether such as ethylene glycol dimethyl ether, ethylene glycol diethyl ether, diethylene glycol dimethyl ether, tetraethylene glycol dimethyl ether, or polyethylene glycol dimethyl ether, and a cyclic ether such as tetrahydrofuran, tetrahydropyran, 2-methyl tetrahydrofuran, 1,3-dioxolane, 4-methyl-1,3-dioxolane, 1,4-dioxane, dimethyl ether, isopropyl ether, n-butyl ether, di-n-butyl ether, dimethoxymethane, dimethoxypropane, diglyme, 12-crown-4, 15-crown-5, or 18-crown-6.

The amine-based small-molecule solvent includes, but is not limited to, ethylenediamine dimethylamine, ethylenediamine tetramethylamine, diethylenetriamine tetramethylamine, or the like.

The thioether-based small-molecule solvent includes, but is not limited to, ethanedithiol dimethyl sulfide, ethanedithiol diethyl sulfide, diethyl dithiodimethyl ether, tetraethyl dithiodimethyl ether, or the like.

The alcohol-based small-molecule solvent includes, but is not limited to, hexanol, heptanol, octanol, nonanol and higher fatty alcohol, polyethylene glycol, polyethylene glycol monomethyl ether, or the like.

The polyether polymer includes, but is not limited to, polyethylene oxide, polypropylene oxide, or the like.

The polyamine polymer includes, but is not limited to, polyethylenediamine, polymethylethylenediamine, or the like.

The polythiol polymer includes, but is not limited to, polyethylenedithiol, methylpolyethylenethiol, or the like.

When the foregoing substances enumerated above as the lithium dissolving agent 13 are used alone, the solubility of metallic lithium may be relatively low in them, and the solubility of lithium may be promoted by stirring and/or heating. However, if one of the foregoing substances together with another organic solvent or two or more of the foregoing substances are selected and mixed for use, the solubility of the metallic lithium is relatively high. For example, a solution of a typical lithium dissolving agent 13 includes, but is not limited to, a mixed solution of tetrahydrofuran and n-hexane, a mixed solution of tetrahydrofuran and cyclohexane, a mixed solution of tetrahydropyran and cyclohexane, a mixed solution of tetrahydrofuran and naphthalene, a mixed solution of ethylene glycol dimethyl ether and biphenyl, a mixed solution of ethylene glycol dimethyl ether and toluene, a mixed solution of dimethyl ether and biphenyl, a mixed solution of petroleum ether and toluene, a mixed solution of tetrahydrofuran and liquid ammonia, a mixed solution of 1,3-dioxolane and liquid ammonia, a mixed solution of ethylene glycol dimethyl ether and liquid ammonia, a mixed solution of propylamine and ethylenediamine, or a mixed solution of butylamine, diaminopropane, and ethanol.

The locking layer 15 is attached to the pore wall of the pore channel 101 of the current collector substrate 11, and can not only be closely combined with the current collector substrate 11, but can also have an affinity with the lithium dissolving agent 13 and improve wetting performance of the lithium dissolving agent 13, thereby constraining the lithium dissolving agent 13 to the pore channel 101 of the current collector substrate 11 by capillary action.

A material of the locking layer 15 is at least one selected from polyvinylidene fluoride (PVDF), polyethylene oxide (PEO), polyacrylic acid (PAA), styrene-butadiene rubber (SBR), carboxymethyl cellulose (CMC), polypyrrole (PPy), polyacrylonitrile (PAN), plant fiber, graphene, graphene oxide, hard carbon, soft carbon, graphite, C₃N₄, rosin acid, rosin glycerol ester, polyvinyl alcohol, naphthalene sulfonic acid, benzamide, polyvinylidene fluoride, polyethyleneimine, tetraethyl orthosilicate, polyvinyl chloride, hydrazine hydrate, trimethylsulfoxide iodide, polytetrafluoroethylene, a copolymer of polyvinylidene fluoride and hexafluoropropylene, polyurethane, or polyacrylate.

A thickness of the locking layer 15 ranges from 50 nm to 10 µm, and preferably, a coating thickness ranges from 500 nm to 5 µm.

A location inducing layer 17 may further be optionally provided on the pore wall of the pore channel 101. The location inducing layer 17 and the locking layer 15 cooperate with each other to control a deposition position of the lithium ions, and induce a deposition direction of the lithium ions, thereby ensuring that there is no risk of the separator being pierced. A coating thickness of the location inducing layer 17 ranges from 10 nm to 800 nm.

The location inducing layer 17 may have a chemical reaction with the lithium ions or have a great lithiophilic property, so as to induce the lithium ions to enter the pore channel 101 of the current collector substrate 11 for deposition. A material of the location inducing layer 17 may be selected from a lithiophilic material such as gold, silver, tin, zinc, magnesium, indium, copper oxide, zinc oxide, aluminum oxide, silicon, or germanium. At least part of the location inducing layer 17 is directly attached to the pore wall of the pore channel 101. The locking layer 15 may be locally directly attached to the pore wall of the pore channel 101 and partially directly cover the location inducing layer 17. In this embodiment, the location inducing layer 17 is a solid layer. For example, when the locking layer 15 is PEO, the locking layer 15 is a liquid layer. Therefore, the location inducing layer 17 needs to be formed first on the pore wall of the pore channel 101, and then the liquid locking layer 15 is formed. In addition, the locking layer 15 does not completely cover the location inducing layer 17, and the location inducing layer 17 is at least partially exposed from the locking layer 15 to be in contact with the lithium ions.

Based on a double-sided application of the negative electrode current collector 10 (for example, a positive electrode is correspondingly disposed on both sides of the negative electrode current collector 10), the negative electrode current collector 10 in this application may alternatively be configured as a structure with openings on both sides. As shown in FIG. 4, a current collector substrate 11 of the negative electrode current collector 10 includes a first surface 102 and a second surface 104 that are disposed opposite each other. A plurality of pore channels 101 are provided on each of the first surface 102 and the second surface 104, and the pore channel 101 provided on the first surface 102 and the pore channel 101 provided on the second surface 104 are not in communication with each other. None of the pore channels 101 run through the current collector substrate 11, that is, each pore channel 101 is a blind hole. In this embodiment, an extension depth of each pore channel 101 is approximately half the thickness of the current collector substrate 11. As described above, the lithium dissolving agent 13 and the locking layer 15 are also provided in each pore channel 101, and the location inducing layer 17 is optionally provided. Details are not described herein again.

Optionally, the anode-free lithium metal battery 100 may further optionally include a positive and negative electrode isolation layer (not shown in the figure). The positive and negative electrode isolation layer is located between the positive electrode and the negative electrode current collector. The positive and negative electrode isolation layer can exchange lithium ions, so as to prevent the lithium dissolving agent in the current collector substrate from reacting with the positive electrode side. The positive and negative electrode isolation layer includes materials such as a cation exchange membrane and a solid-state electrolyte. A thickness of the positive and negative electrode isolation layer ranges from 20 µm to 500 µm.

This application further provides a preparation method for the negative electrode current collector, including the following steps:
providing a current collector substrate;
forming a plurality of pore channels in the current collector substrate;
forming locking layers on pore walls of the plurality of pore channels; and
filling a lithium dissolving agent in the pore channels.

The preparation method has a simple process, and the lithium dissolving agent can be constrained to the pore channels of the current collector substrate by capillary action.

It may be understood that the preparation method for the negative electrode current collector may further include a step of forming a location inducing layer on the pore wall of the pore channel before the lithium dissolving agent is filled in the pore channel. The location inducing layer may have a chemical reaction with the lithium ions or have a great lithiophilic property, so as to induce the lithium ions to enter the pore channel of the current collector substrate for deposition. A material of the location inducing layer may be selected from a lithiophilic material such as gold, silver, tin, zinc, magnesium, indium, copper oxide, zinc oxide, aluminum oxide, silicon, or germanium. In this embodiment, the location inducing layer is a solid layer. When the locking layer is a liquid layer, the location inducing layer needs to be formed first on the pore wall of the pore channel, and then the locking layer is formed. In addition, the locking layer does not completely cover the location inducing layer, and the location inducing layer is at least partially exposed from the locking layer.

The step of providing a current collector substrate includes providing a current collector substrate that is a thin layer made of a conductive material such as copper, stainless steel, or alloy. A thickness of the current collector substrate ranges from 5 µm to 150 µm, and preferably from 10 µm to 50 µm.

The step of forming a plurality of pore channels in the current collector substrate may be specifically forming pore channels in a capillary array by means of laser drilling or etching. The arrangement of the plurality of pore channels may be regular arrangement, for example, substrate arrangement; or may be irregular arrangement, for example, may be a foam type structure. Each pore channel may run through the current collector substrate, or may not run through the current collector substrate. A pore size of each pore channel is less than 100 µm. A porosity of the current collector substrate ranges from 20% to 85%.

The step of forming a locking layer on the pore wall of the pore channel includes: formulating a solution of the locking layer, and then attaching the solution of the locking layer to the pore wall of the pore channel of the current collector substrate by using a method such as liquid phase impregnation, reduced pressure impregnation, or reduced pressure drainage. A thickness of the locking layer ranges from 50 nm to 10 µm, and preferably, a coating thickness ranges from 500 nm to 5 µm.

The lithium dissolving agent is a liquid or a gel capable of dissolving lithium metal. The lithium dissolving agent needs to dissolve the lithium metal in an organic solution in an inert atmosphere to form a lithium compound. The lithium dissolving agent includes at least one selected from a small-molecule aromatic hydrocarbon capable of complexing lithium ions or a polymer that contains an aromatic hydrocarbon group and is capable of complexing lithium ions, a small-molecule solvent (including an ether-based solvent, an amine-based small-molecule solvent, a thioether small-molecule solvent, and an alcohol-based small-molecule solvent) capable of complexing lithium ions, and a polymer (including a polyether polymer, a polyamine polymer, and a polythiol polymer) capable of complexing lithium ions, and is preferably a mixed solution configured by two or more classes. A volume molar concentration of lithium in the lithium dissolving agent may range from 0.1 M to 10 M. An appropriate amount of lithium metal is dissolved in the foregoing mixed organic solution, and a dissolution process of the metallic lithium canbe promoted by stirring or heating, so as to obtain the lithium dissolving agent. A concentration of lithium in the lithium dissolving agent ranges from 0.1 M to 10 M.

The step of filling the lithium dissolving agent in the pore channel includes: soaking the porous current collector substrate formed with the locking layer in the lithium dissolving agent for 5 min to 5 h, so that the lithium dissolving agent occupies all the pore channels of the current collector substrate; and removing the substance of the lithium dissolving agent on the surface of the porous current collector substrate after the current collector substrate is taken out. It may be understood that a method for filling the lithium dissolving agent in the pore channel is not limited thereto.

This application further provides a preparation method for an anode-free lithium metal battery using a negative electrode current collector described above. The preparation method specifically includes the following steps.

The negative electrode current collector described above is prepared to replace a conventional negative electrode plate.

A positive electrode is prepared. The positive electrode may be a conventional positive electrode plate. For example, a positive electrode slurry is applied on a surface of a positive electrode current collector. The positive electrode slurry includes a cathode active substance, a binder, a conductive agent, and the like. The cathode active substance includes a lithium cobalt oxide material, NCM/NCA layered lithium transition metal oxides, a lithium-rich cathode material, or the like.

The porous current collector unit, the separator, and the positive electrode plate are wound or stacked to make a bare cell, into which an electrolyte solution is injected. After the injection of the electrolyte solution, packaging is performed, so as to prepare an anode-free lithium metal battery.

The electrolyte solution consists of a solvent and a metal salt, and the solvent includes one or more of a carbonate solvent, an ether-based solvent, and a carboxylate ester solvent. The carbonate solvent includes a cyclic carbonate or a linear carbonate. The cyclic carbonate may be specifically one or more of ethylene carbonate (EC), propylene carbonate (PC), γ-butyrolactone (GBL), butylene carbonate (BC), fluoroethylene carbonate (FEC), and vinylene carbonate (VC). The linear carbonate may be specifically one or more of dimethyl carbonate (DMC), ethyl methyl carbonate (EMC), diethyl carbonate (DEC), and dipropyl carbonate (DPC). The ether-based solvent includes a cyclic ether or a linear ether. The cyclic ether may be specifically one or more of 1,3-dioxolane (DOL), 1,4-dioxane (DX), crown ether, tetrahydrofuran (THF), 2-methyltetrahydrofuran (2-CH3-THF), and 2-trifluoromethyltetrahydrofuran (2-CF3-THF). The linear ether may be specifically one or more of dimethoxymethane (DMM), 1,2-dimethoxyethane (DME), and tetraethylene glycol dimethyl ether (TEGDME). The carboxylate solvent may be specifically one or more of methyl acetate (MA), ethyl acetate (EA), propyl acetate (EP), butyl acetate, propyl acetate (PP), and butyl propionate. An anion of the metal salt includes, but is not limited to, one or more of hexafluorophosphate anion (PF₆⁻), hexafluoroarsenate anion (AsF₆⁻), perchlorate anion (ClO₄⁻), tetrafluoroborate anion (BF₄⁻), dioxalate borate anion (B(C₂O₄)²⁻, BOB⁻) difluorooxalate borate anion (BF₂C₂O₄⁻, DFOB⁻) bisfluorosulfonimide anion (FSI⁻), and bistrifluorosulfonimide anion (TFSI⁻).

Optionally, the use of the negative electrode current collector described above may be extended to an all-solid-state lithium metal battery. In this case, the cathode active substance and the solid-state electrolyte are integrally designed on the positive electrode side. For example, the cathode active substance, the conductive agent, the binder, and the solid-state electrolyte material are mixed and stirred at an appropriate ratio to prepare a slurry, and the slurry is evenly applied on the surface of the positive electrode current collector, and is baked in vacuum to obtain an integral positive electrode plate of the cathode active substance and the solid-state electrolyte. An anode-free all-solid-state lithium metal battery is prepared from the negative electrode current collector, a separator of an inorganic solid-state electrolyte, and the integral positive electrode plate by using a stacking process.

The inorganic solid-state electrolyte includes a common oxide solid-state electrolyte or sulfide solid-state electrolyte in the art. For example, the oxide solid-state electrolyte is a perovskite solid electrolyte, a sodium super ion conductor solid electrolyte (namely, NASICON solid electrolyte), a lithium super ion conductor solid electrolyte (namely, LISICON solid electrolyte), a garnet solid electrolyte, a glassy oxide solid electrolyte, or the like. The sulfide solid electrolyte is a thio-lithium super ion conductor solid electrolyte (namely, thio-LISICON solid electrolyte), a glassy sulfide solid electrolyte, or a composite of the above inorganic solid electrolytes.

The technical solutions in the embodiments of this application are further described below by using specific examples.

### Example 1

Preparation of an anode-free lithium metal battery includes the following steps:
(1) A negative electrode current collector substrate was processed into a three-dimensional porous array current collector substrate by using laser drilling technology.
(2) A chemical tin plating solution was formulated. Substances contained and their concentrations are: 200 g/L methane sulfonic acid, 200 g/L tin methanesulfonate, 70 g/L thiourea, 10 g/L sodium hypophosphite, 2 g/L ethylenediaminetetraacetic acid (EDTA), and 2 g/L ascorbic acid. The three-dimensional porous array current collector substrate was immersed in the chemical tin plating solution, and was left to stand for 5 min. Then, the three-dimensional porous array current collector substrate was pulled vertically out of the solution, and the aqueous solution on the surface of the current collector substrate was drained. Then, the current collector was placed at 90°C for 30 min to react. After completion, salt in pore channels of the current collector was washed away with water, and water in the pores in the three-dimensional porous array current collector was removed by drying, so as to obtain a Sn location inducing layer applied on the pore wall of the pore channel of the porous current collector substrate.
(3) PEO was dissolved in THF to form a uniform solution with a concentration of 3%, and the three-dimensional porous array current collector substrate with the Sn layer formed on the pore wall of the pore channel was immersed in the solution, and was left to stand for 5 min. Then, the three-dimensional porous array current collector substrate was pulled vertically out of the solution, and the polymer solution on the surface of the current collector was drained. The solvent in the pores of the three-dimensional porous array current collector was removed by blast drying at 60°C, so as to obtain a PEO locking layer applied on the pore wall of the pore channel of the porous current collector substrate.
(4) In an anhydrous and oxygen-free environment (for example, an inert atmosphere), metallic lithium and biphenyl were dissolved in an ethylene glycol dimethyl ether solution at a mass ratio of 1:22 (a molar ratio of 1:1) to form a uniform solution (a lithium dissolving agent), where a concentration of the biphenyl is 1 M. The three-dimensional porous array current collector substrate with the Sn layer and the PEO layer formed on the pore wall of the internal pore channel was immersed in the foregoing solution, and was left to stand for 5 min. Then, the three-dimensional porous array current collector substrate was pulled vertically out of the solution, and the lithium dissolved solution on the surface of the current collector was drained, so as to obtain a three-dimensional porous array current collector substrate coated with the location inducing layer, the locking layer, and the lithium dissolving agent; that is, a negative electrode current collector is obtained.
(5) A perfluorinated ion exchange membrane was soaked in a LiOH solution with a concentration of 2 M at 80°C for 2 hours; washed with deionized water for 3 times; dried in vacuum at 60°C until the moisture of the perfluorinated ion exchange membrane was completely removed; and then swelled in the ethylene glycol dimethyl ether solution of LiTFSI with a concentration of 1 M to obtain a positive and negative electrode isolation layer.
(6) The prepared negative electrode current collector, the lithium cobalt oxide positive electrode, and the positive and negative electrode isolation layer were assembled into a button cell. A 50 µL LiPF₆ electrolyte solution with a concentration of 1.0 mol/L (in the LiPF₆ electrolyte solution, a weight ratio of DMC, EMC, and EC is 1:1:1) was added from the positive electrode to infiltrate the positive electrode plate.

### Example 2

Preparation of an anode-free lithium metal battery includes the following steps:
(1) A negative electrode current collector substrate was processed into a three-dimensional porous array current collector substrate by using laser drilling technology.
(2) A chemical tin plating solution was formulated. Substances contained and their concentrations are: 200 g/L methane sulfonic acid, 200 g/L tin methanesulfonate, 70 g/L thiourea, 10 g/L sodium hypophosphite, 2 g/L EDTA, and 2 g/L ascorbic acid. The three-dimensional porous array current collector substrate was immersed in the foregoing solution, and was left to stand for 5 min. Then, the three-dimensional porous array current collector substrate was pulled vertically out of the solution, and the aqueous solution on the surface of the current collector substrate was drained. Then, the current collector was placed at 90°C for 30 min to react. After completion, salt in pore channels of the current collector substrate was washed away with water, and water in the pores in the three-dimensional porous array current collector substrate was removed by drying, so as to obtain a Sn location inducing layer applied on the pore wall of the pore channel of the porous current collector substrate.
(3) PEO was dissolved in THF to form a uniform solution with a concentration of 3%, and the three-dimensional porous array current collector substrate with the internal pore channel coated with the Sn layer was immersed in the solution, and was left to stand for 5 min. Then, the three-dimensional porous array current collector substrate was pulled vertically out of the solution, and the polymer solution on the surface of the current collector substrate was drained. The solvent in the pores of the three-dimensional porous array current collector substrate was removed by blast drying at 60°C, so as to obtain a PEO locking layer applied on the pore wall of the pore channel of the porous current collector substrate.
(4) In an anhydrous and oxygen-free environment, metallic lithium and biphenyl were dissolved in an ethylene glycol dimethyl ether solution at a mass ratio of 1:22 (a molar ratio of 1:1) to form a uniform solution (a lithium dissolving agent), where a concentration of the biphenyl is 1 M. The three-dimensional porous array current collector substrate with the internal pore channel coated with the Sn layer and the PEO layer was immersed in the foregoing solution, and was left to stand for 5 min. Then, the three-dimensional porous array current collector substrate was pulled vertically out of the solution, and the lithium dissolved solution on the surface of the current collector substrate was drained, so as to obtain a three-dimensional porous array current collector substrate having the location inducing layer, the locking layer, and the lithium dissolving agent; that is, a negative electrode current collector is obtained.
(5) A Li₇La₃Zr₂O₁₂ (LLZO) ceramic sheet with a thickness of 50 µm is used as a positive and negative electrode isolation layer.
(6) The prepared negative electrode current collector, the lithium cobalt oxide positive electrode, and the positive and negative electrode isolation layer were assembled into a button cell. A 50 µL LiPF₆ electrolyte solution with a concentration of 1.0 mol/L (in the LiPF₆ electrolyte solution, a weight ratio of DMC, EMC, and EC is 1:1:1) was added from the positive electrode to infiltrate the positive electrode plate.

### Example 3

Preparation of an anode-free lithium metal battery includes the following steps:
(1) A negative electrode current collector was processed into a three-dimensional porous array current collector substrate by using laser drilling technology.
(2) A chemical tin plating solution was formulated. Substances contained and their concentrations are: 200 g/L methane sulfonic acid, 200 g/L tin methanesulfonate, 70 g/L thiourea, 10 g/L sodium hypophosphite, 2 g/L EDTA, and 2 g/L ascorbic acid. The three-dimensional porous array current collector was immersed in the foregoing solution, and was left to stand for 5 min. Then, the three-dimensional porous array current collector substrate was pulled vertically out of the solution, and the aqueous solution on the surface of the current collector substrate was drained. Then, the current collector substrate was placed at 90°C for 30 min to react. After completion, salt in pore channels of the current collector substrate was washed away with water, and water in the pores in the three-dimensional porous array current collector substrate was removed by drying, so as to obtain a Sn location inducing layer applied on the pore wall of the pore channel of the porous current collector substrate.
(3) PEO was dissolved in THF to form a uniform solution with a concentration of 3%, and the three-dimensional porous array current collector substrate with the internal pore channel coated with the Sn layer was immersed in the solution, and was left to stand for 5 min. Then, the three-dimensional porous array current collector substrate was pulled vertically out of the solution, and the polymer solution on the surface of the current collector substrate was drained. The solvent in the pores of the three-dimensional porous array current collector substrate was removed by blast drying at 60°C, so as to obtain a PEO locking layer applied on the pore wall of the pore channel of the porous current collector substrate.
(4) In an anhydrous and oxygen-free environment, metallic lithium and biphenyl were dissolved in an ethylene glycol dimethyl ether solution at a mass ratio of 1:22 (a molar ratio of 1:1) to form a uniform solution (a lithium dissolving agent), where a concentration of the biphenyl is 1 M. The three-dimensional porous array current collector substrate with the internal pore channel coated with the Sn layer and the PEO layer was immersed in the foregoing solution, and was left to stand for 5 min. Then, the three-dimensional porous array current collector substrate was pulled vertically out of the solution, and the lithium dissolved solution on the surface of the current collector substrate was drained, so as to obtain a three-dimensional porous array current collector having the location inducing layer, the locking layer, and the lithium dissolving agent; that is, a negative electrode current collector is obtained.
(5) A perfluorinated ion exchange membrane was soaked in a LiOH solution with a concentration of 2 M at 80°C for 2 hours; washed with deionized water for 3 times; dried in vacuum at 60°C until the moisture of the perfluorinated ion exchange membrane was completely removed; and then swelled in the ethylene glycol dimethyl ether solution of 1 M LiTFSI to obtain a positive and negative electrode isolation layer.
(6) Preparation of lithium cobalt oxide coated with a lithium cobalt oxide solid-state electrolyte: A specific amount of LiLaTiOj is weighed, and mixed and stirred uniformly with lithium cobalt oxide, placed in a muffle furnace at 700°C to 900°C, and sintered for 8 to 12 hours. Then, the sintered product is pulverized to obtain a lithium cobalt oxide cathode material coated with a solid-state electrolyte on the surface.
(7) The prepared negative electrode current collector, the lithium cobalt oxide positive electrode protected by the solid-state electrolyte, and the positive and negative electrode isolation layer were assembled into a button cell. A 50 µL LiPF₆ electrolyte solution with a concentration of 1.0 mol/L (in the LiPF₆ electrolyte solution, a weight ratio of DMC, EMC, and EC is 1:1:1) was added from the positive electrode to infiltrate the positive electrode plate.

### Example 4

Preparation of an anode-free lithium metal battery includes the following steps:
(1) A negative electrode current collector was processed into a three-dimensional porous array current collector substrate by using laser drilling technology.
(2) A chemical tin plating solution was formulated. Substances contained and their concentrations are: 200 g/L methanesulfonic acid, 200 g/L tin methanesulfonate, 70 g/L thiourea, 10 g/L sodium hypophosphite, 2 g/L EDTA, and 2 g/L ascorbic acid. The three-dimensional porous array current collector was immersed in the foregoing solution, and was left to stand for 5 min. Then, the three-dimensional porous array current collector substrate was pulled vertically out of the solution, and the aqueous solution on the surface of the current collector substrate was drained. Then, the current collector substrate was placed at 90°C for 30 min to react. After completion, salt in pore channels of the current collector substrate was washed away with water, and water in the pores in the three-dimensional porous array current collector substrate was removed by drying, so as to obtain a Sn location inducing layer applied on the pore wall of the pore channel of the porous current collector substrate.
(3) PEO was dissolved in THF to form a uniform solution with a concentration of 3%, and the three-dimensional porous array current collector substrate with the internal pore channel coated with the Sn layer was immersed in the solution, and was left to stand for 5 min. Then, the three-dimensional porous array current collector substrate was pulled vertically out of the solution, and the polymer solution on the surface of the current collector substrate was drained. The solvent in the pores of the three-dimensional porous array current collector substrate was removed by blast drying at 60°C, so as to obtain a PEO locking layer applied on the pore wall of the pore channel of the porous current collector substrate.
(4) In an anhydrous and oxygen-free environment, magnetons, 0.6 g polyethylene glycol monomethyl ether (mPEG, M.W. = 750), and 0.39 g LiTFSI were added to a vial. A temperature of a heating plate was set to 200°C, and then stirring began until lithium salt was completely dissolved. 0.264 g lithium sheets (d ≈ 11 mm) were added to the completely dissolved LiTFSI mPEG solution in batches, and a rotational speed was slowly increased to 800 rpm to form a gray uniform dispersion. The gray uniform dispersion was cooled to room temperature. 20 mL anhydrous THF was added to the gray dispersion. The vial was taken out of a glovebox, and placed in an ultrasound machine overnight with ultrasound. After the completion of ultrasound, the liquid negative electrode was transferred to the glovebox again and placed on the heating plate. The temperature of the heating plate was set to 70°C to completely volatilize THF. After the completion of volatilization, the three-dimensional porous array current collector with the internal pore channel coated with the Sn layer and the PEO layer was placed on a glass plate; the prepared liquid negative electrode was evenly applied to the pore channels of the current collector by using a roller; a 50 µm LLZO ceramic sheet was attached to the current collector coated with the liquid negative electrode; and the excess liquid negative electrode at the edge was removed, so as to obtain a three-dimensional porous array current collector, namely, a negative electrode current collector, having a location inducing layer, a locking layer, and a lithium dissolving agent and packaged and protected by an all-solid-state electrolyte.
(5) The prepared negative electrode current collector and the lithium cobalt oxide positive electrode were assembled into a button cell. A 50 µL LiPF₆ electrolyte solution with a concentration of 1.0 mol/L (in the LiPF₆ electrolyte solution, a weight ratio of DMC, EMC, and EC is 1:1:1) was added from the positive electrode to infiltrate the positive electrode plate.

### Comparative Example

LiCoO₂/Li battery assembly: A lithium metal foil, a lithium cobalt oxide positive electrode, and a Celgard separator were assembled into a button cell. A 50 µL LiPF₆ electrolyte solution with a concentration of 1.0 mol/L (in the LiPF₆ electrolyte solution, a weight ratio of DMC, EMC, and EC is 1:1:1) was added.

### Comparative testing and analysis

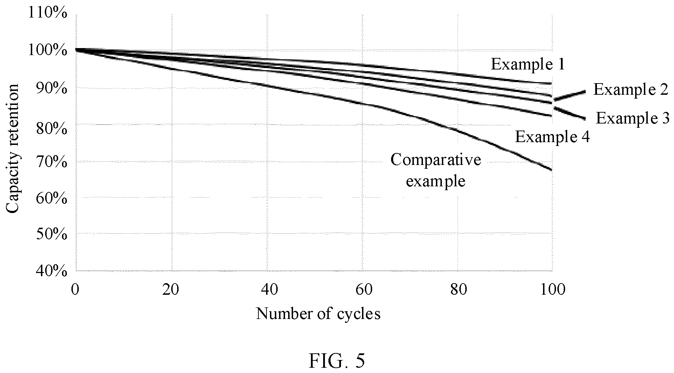

Charge and discharge tests are separately performed, according to a 0.1C/0.2C charge and discharge regime, on the batteries assembled in Examples 1 to 4 and Comparative Example. A voltage range of the lithium metal battery is from 3.0 V to 4.5 V, and test results obtained are shown in Table 1 and FIG. 5.

| No. | Battery type | Capacity retention after 100 cycles |
|---|---|---|
| Example 1 | A three-dimensional porous array current collector having a location inducing layer, a locking layer, and a lithium dissolving agent is used as a negative electrode, and a perfluorinated ion membrane is used as a positive and negative electrode isolation layer. | 90.5% |
| Example 2 | A three-dimensional porous array current collector having a location inducing layer, a locking layer, and a lithium dissolving agent is used as a negative electrode, and an LLZO ceramic sheet is used as a positive and negative electrode isolation layer. | 87.6% |
| Example 3 | A three-dimensional porous array current collector having a location inducing layer, a locking layer, and a lithium dissolving agent is used as a negative electrode, a perfluorinated ion membrane is used as a positive and negative electrode isolation layer, and a positive electrode is compositely protected by a solid-state electrolyte. | 85.1% |
| Example 4 | A three-dimensional porous array current collector having a location inducing layer, a locking layer, and a lithium dissolving agent is used as a negative electrode, and an LLZO ceramic sheet is used as a negative electrode package and a positive and negative electrode isolation layer. | 84.3% |
| Comparative Example | Metallic lithium negative electrode | 68.3% |

It can be learned from the test results in Table 1 and FIG. 5 that, a capacity retention after 100 cycles of the batteries in Examples 1 to 4 is far higher than a capacity retention after 100 cycles of the battery in Comparative Example. It indicates that the cycle performance of the battery can be improved significantly by using the three-dimensional porous array current collector having the location inducing layer, the locking layer, and the lithium dissolving agent as the negative electrode. This is because a locking layer and/or a location inducing layer are attached to a wall of a pore channel of the porous current collector substrate. A lithium dissolving agent is filled in the pore channel, and exists stably in the pore channel by means of capillary adsorption. During charging, lithium ions enter the porous current collector unit, and are combined with the lithium dissolving agent to form liquid metallic lithium, which can exist stably in the current collector unit, and reduce the risk of lithium dendrites.

It should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. In the case of no conflict, the implementations of this application and the features in the implementations may be mutually combined. Therefore, the protection scope of this application shall be subject to the protection scope of the claims.

## Claims

1. A negative electrode current collector of a lithium metal battery, comprising:
a porous current collector substrate provided with a plurality of pore channels;
a lithium dissolving agent filled in the pore channels of the current collector substrate, the lithium dissolving agent being a liquid or a gel capable of dissolving lithium metal; and
a locking layer attached to a pore wall of the pore channel and located between the pore wall of the pore channel and the lithium dissolving agent, wherein the locking layer is configured to constrain the lithium dissolving agent to the pore channel of the current collector substrate.

2. The negative electrode current collector according to claim 1, wherein a pore size of each pore channel is less than 100 µm, and a porosity of the current collector substrate ranges from 20% to 85%.

3. The negative electrode current collector according to claim 1, wherein a thickness of the current collector substrate ranges from 5 µm to 150 µm.

4. The negative electrode current collector according to claim 1, wherein the lithium dissolving agent comprises at least one selected from a small-molecule aromatic hydrocarbon capable of complexing lithium ions or a polymer that contains an aromatic hydrocarbon group and is capable of complexing lithium ions, a small-molecule solvent capable of complexing lithium ions, and a polymer capable of complexing lithium ions; the small-molecule solvent capable of complexing lithium ions comprises an ether-based solvent, an amine-based small-molecule solvent, and thioether- and alcohol-based small-molecule solvents; and the polymer capable of complexing lithium ions comprises a polyether polymer, a polyamine polymer, and a polythiol polymer.

5. The negative electrode current collector according to claim 4, wherein a volume molar concentration of lithium in the lithium dissolving agent ranges from 0.1 M to 10 M.

6. The negative electrode current collector according to claim 4 or 5, wherein
the small-molecule aromatic hydrocarbon comprises biphenyl, naphthalene, phenanthrene, anthracene, tetracene, or pyrene;
the polymer containing an aromatic hydrocarbon group comprises a polymer containing an aromatic group of biphenyl, naphthalene, phenanthrene, anthracene, tetracene, or pyrene;
the ether-based solvent comprises ethylene glycol dimethyl ether, ethylene glycol diethyl ether, diethylene glycol dimethyl ether, tetraethylene glycol dimethyl ether, polyethylene glycol dimethyl ether, tetrahydrofuran, tetrahydropyran, 2-methyl tetrahydrofuran, 1,3-dioxolane, 4-methyl-1,3-dioxolane, 1,4-dioxane, dimethyl ether, isopropyl ether, n-butyl ether, di-n-butyl ether, dimethoxymethane, dimethoxypropane, diglyme, 12-crown-4, 15-crown-5, or 18-crown-6;
the amine-based small-molecule solvent comprises ethylenediamine dimethylamine, ethylenediamine tetramethylamine, or diethylenetriamine tetramethylamine; and the thioether-based small-molecule solvent comprises, but is not limited to, ethanedithiol dimethyl sulfide, ethanedithiol diethyl sulfide, diethyl dithiodimethyl ether, or tetraethyl dithiodimethyl ether;
the alcohol-based small-molecule solvent comprises hexanol, heptanol, octanol, nonanol and higher fatty alcohol, polyethylene glycol, or polyethylene glycol monomethyl ether;
the polyether polymer comprises polyethylene oxide or polypropylene oxide;
the polyamine polymer comprises polyethylenediamine or polymethylethylenediamine; and
the polythiol polymer comprises polyethylenedithiol or methylpolyethylenethiol.

7. The negative electrode current collector according to claim 1, wherein a material of the locking layer is at least one selected from polyvinylidene fluoride, polyethylene oxide, polyacrylic acid, styrene-butadiene rubber, carboxymethyl cellulose, polypyrrole, polyacrylonitrile, plant fiber, graphene, graphene oxide, hard carbon, soft carbon, graphite, C₃N₄, rosin acid, rosin glycerol ester, polyvinyl alcohol, naphthalenesulfonic acid, benzamide, polyvinylidene fluoride, polyethyleneimine, tetraethyl orthosilicate, polyvinyl chloride, hydrazine hydrate, trimethylsulfoxide iodide, polytetrafluoroethylene, a copolymer of polyvinylidene fluoride and hexafluoropropylene, polyurethane, or polyacrylate.

8. The negative electrode current collector according to claim 7, wherein a coating thickness of the locking layer ranges from 50 nm to 10 µm.

9. The negative electrode current collector according to claim 1, wherein a location inducing layer is further provided on the pore wall of the pore channel, the location inducing layer possesses a property of a chemical reaction with lithium ions or a lithiophilic property, and the location inducing layer is configured to cooperate with the locking layer to control a deposition position and a deposition direction of the lithium ions.

10. The negative electrode current collector according to claim 9, wherein a material of the location inducing layer is at least one selected from gold, silver, tin, zinc, magnesium, indium, copper oxide, zinc oxide, aluminum oxide, silicon, and germanium.

11. The negative electrode current collector according to any one of claims 1 to 10, wherein the current collector substrate comprises a first surface and a second surface that are disposed opposite each other; a plurality of pore channels are provided on each of the first surface and the second surface, none of the pore channels run through the current collector substrate, and the pore channel provided on the first surface and the pore channel provided on the second surface are not in communication with each other.

12. A lithium metal battery, comprising a negative electrode current collector according to any one of claims 1 to 11, a positive electrode, and a separator located between the negative electrode current collector and the positive electrode, wherein the lithium metal battery directly uses the negative electrode current collector as a negative electrode.

13. The lithium metal battery according to claim 12, wherein the lithium metal battery further comprises a positive and negative electrode isolation layer, the positive and negative electrode isolation layer is located between the positive electrode and the negative electrode current collector, and the positive and negative electrode isolation layer is configured to exchange lithium ions and prevent the lithium dissolving agent in the negative electrode current collector from reacting with the positive electrode.

14. The lithium metal battery according to claim 13, wherein the positive and negative electrode isolation layer comprises a cation exchange membrane and a solid-state electrolyte; and a thickness of the positive and negative electrode isolation layer ranges from 20 µm to 500 µm.

15. A preparation method for a negative electrode current collector, comprising:
providing a current collector substrate;
forming a plurality of pore channels in the current collector substrate;
forming locking layers on pore walls of the plurality of pore channels; and
filling a lithium dissolving agent in the pore channels, wherein the lithium dissolving agent is a liquid or a gel capable of dissolving lithium metal, and the locking layer is configured to constrain the lithium dissolving agent to the pore channels of the current collector substrate.

16. The preparation method for the negative electrode current collector according to claim 15, wherein the step of forming a plurality of pore channels in the current collector substrate comprises forming each pore channel having a pore size less than 100 µm, with a porosity of the current collector substrate ranging from 20% to 85%.

17. The preparation method for the negative electrode current collector according to claim 15, wherein the preparation method for the negative electrode current collector further comprises a step of forming location inducing layers on the pore walls of the pore channels before the locking layers are formed on the pore walls of the plurality of pore channels, the location inducing layer possesses a property of a chemical reaction with lithium ions or a lithiophilic property, and the location inducing layer is configured to cooperate with the locking layer to control a deposition position and a deposition direction of the lithium ions.

18. The preparation method for the negative electrode current collector according to claim 17, wherein a coating thickness of the location inducing layer ranges from 10 nm to 800 nm; and a material of the location inducing layer is at least one selected from gold, silver, tin, zinc, magnesium, indium, copper oxide, zinc oxide, aluminum oxide, silicon, and germanium.
